Europäisches Patentamt

European Patent Office

Office européen des brevets

(11) Veröffentlichungsnummer: **0 463 465 A1**

# EUROPÄISCHE PATENTANMELDUNG

(21) Anmeldenummer: **91109573.5**

(22) Anmeldetag: **11.06.91**

(51) Int. Cl.5: **C08K 5/17**, C08K 5/21, C08K 3/30, C08K 5/20, C08L 21/00

(30) Priorität: **23.06.90 DE 4020059**

(43) Veröffentlichungstag der Anmeldung: **02.01.92 Patentblatt 92/01**

(84) Benannte Vertragsstaaten: **DE ES FR GB IT SE**

(71) Anmelder: **RHEIN-CHEMIE RHEINAU GMBH Postfach 81 04 09 Mülheimer Strasse 24-28 W-6800 Mannheim 81(DE)**

(72) Erfinder: **Bauer, Armin, Dr. Neulussheimer Weg 9 W-6835 Brühl/Baden(DE)**
Erfinder: **Ehrend, Helfried, Dr. Leharstrasse 17 W-6720 Speyer(DE)**
Erfinder: **Menting, Karl-Hans, Dr. Feuerbachstrasse 11 W-6701 Altrip(DE)**
Erfinder: **Preussmann, Rudolf, Prof. Dr. Goethestrasse 50 W-6904 Eppelheim(DE)**
Erfinder: **Spiegelhalder, Bertold, Dr. Klostergasse 11 W-6900 Heidelberg-Wieblingen(DE)**

(74) Vertreter: **Gremm, Joachim, Dr. et al Bayer AG Konzernverwaltung RP Patente Konzern W-5090 Leverkusen 1, Bayerwerk(DE)**

(54) **Die Nitrosaminbildung verhindernde Zusätze zu vulkanisierbaren Kautschukmischungen.**

(57) Gegenstand der Erfindung sind an sich bekannte und übliche schwefelvulkanisierbare Kautschukmischungen, die einen Zusatz von 0,1 - 10 Gew.-%, bezogen auf Kautschuk (phr), einer Verbindung mit mindestens einer primären Aminogruppe enthalten und gegebenenfalls einen Ester der Ascorbinsäure (als Alkoholkomponente) mit einer aliphatischen Monocarbonsäure.

Das Problem des Auftretens von Nitrosaminen während der Vulkanisation von Kautschuken ist seit langem bekannt. Einige Nitrosamine sind kanzerogen, so daß ihre Entstehung oder Anwesenheit möglichst verhindert werden muß. Bereits seit September 1988 besteht die Verpflichtung, die Konzentration von Nitrosaminen am Arbeitsplatz zu vermindern auf max. 2,5 $\mu$g/m$^3$.

Nitrosamine entstehen bei der Kautschukvulkanisation hauptsächlich durch Nitrosierung sekundärer Amine mit Stickoxiden oder Nitrit. Die sekundären Amine ihrerseits sind Spaltprodukte des für die Vulkanisation erforderlichen Beschleunigers. Stickoxide (NO$_x$) befinden sich in der Luft und in Bestandteilen der Kautschukmischung, Nitrit in Bestandteilen der Kautschukmischung (als Verunreinigung).

Um die Bildung von Nitrosaminen bei der Kautschukvulkanisation zu verhindern oder wenigstens zu vermindern, kann man prinzipiell

1. sekundäre Amine vermeiden,
2. nitrosierende Agenzien eliminieren,
3. für die Nitrosaminbildung günstige Bedingungen vermeiden,
4. gebildete Nitrosamine entfernen.

Praktisch brauchbar sind nur die Möglichkeiten 1 und 2. Bei der vorliegenden Erfindung wird von der 2. Möglichkeit Gebrauch gemacht, der Eliminierung nitrosierender Agenzien, im wesentlichen also von Nitrit und Stickoxiden (NO$_x$).

Der Erfindung liegt die Erkenntnis zugrunde, daß die nitrosierenden Agenzien dadurch an der Reaktion mit sekundären Aminen unter Bildung von Nitrosaminen gehindert werden können, daß man Ihnen andere, nicht nitrosaminbildende Reaktionspartner in ausreichender Menge zur Verfügung stellt.

Gegenstand der Erfindung sind an sich bekannte und übliche schwefelvulkanisierbare Kautschukmischungen, die einen Zusatz von 0,1 - 10 Gew.-%, bezogen auf Kautschuk, einer Verbindung mit mindestens einer primären Aminogruppe enthalten.

Ein weiterer Gegenstand der Erfindung ist die Verwendung einer Verbindung mit mindestens einer primären Aminogruppe als, die Nitrosaminbildung verhindernder, Zusatz zu bekannten schwefelvulkanisierbaren Kautschukmischungen.

Ebenfalls Gegenstand der Erfindung ist ein Verfahren zur Verhinderung der Nitrosaminbildung bei der Vulkanisation schwefelvulkanisierbarer Kautschukmischungen, das dadurch gekennzeichnet ist, daß man bei der Herstellung der Mischung vor der Zugabe des Vulkanisationsbeschleunigers 0,1 bis 10 Gew.-%, bezogen auf Kautschuk, einer Verbindung mit einer primären Aminogruppe einarbeitet.

Schwefelvulkanisierbare Kautschukmischungen im Sinne der Erfindung sind übliche Mischungen, die im wesentlichen einen vulkanisierbaren Kautschuk, Füllstoffe (Ruß), Schwefel und/oder einen Schwefelspender, Vulkanisationsbeschleuniger und evtl. weitere übliche Zusatze wie Öl, Stabilisatoren, Alterungsschutzmittel enthalten. Vulkanisierbare Kautschuke sind insbesonders Naturkautschuk, Polybutadien, Styrolbutadien-Copolymerisat, Ethylen-Propylen-Dien-Terpolymere(EPDM) sowie Nitrilkautschuk. Füllstoffe sind insbesondere Ruß, Silikate, Zinkoxid. Schwefelspender sind insbesondere: Morpholindisulfid, Thiocarbamylsulfenamid, Caprolactamdisulfid. Vulkanisationsbeschleuniger sind insbesondere: Sulfenamide, Thiurame, Dithiocarbamate, Mercaptobenzothiazol.

Solche Kautschukmischungen sind üblich und bekannt. Sie werden in bekannter Weise durch Vermischen der Bestandteile auf Mischmaschinen wie Innenmischern, Walzenstühlen hergestellt.

Erfindungsgemäß werden den Mischungen kleine Mengen, bevorzugt 0,1 bis 10 Gew.-%, von Verbindungen mit primären Aminogruppen zugesetzt. Diese Stoffe werden bevorzugt zusammen mit den Füllstoffen eingearbeitet, üblicherweise in der Masterbatch-Stufe.

In jedem Falle muß die Zugabe vor dem Zumischen der Vulkanisationsbeschleuniger erfolgen.

Geeignete Zusätze sind im Prinzip alle Verbindungen mit mindestens einer primären Aminogruppe. Beispiele hierfür sind primäre aliphatische Amine mit 1 bis 20 Kohlenstoffatomen, primäre aliphatische Diamine mit 1 bis 20 Kohlenstoffatomen, Harnstoff und seine Derivate, organische Säureamide, Amidosulfonsäuren. Spezielle Beispiele sind Ethanolamin, Octylamin, Ethylendiamin, Diaminooctan, Stearinsäureamid und Harnstoff.

Durch den Zusatz dieser Verbindungen wird, wie oben gesagt, die Nitrosaminbildung bei der Vulkanisation weitgehend zurückgedrängt.

Zusätzlich zu den Verbindungen mit primären Aminogruppen können erfindungsgemäß 0,1 bis 10 Gew.-%, bezogen auf Kautschuk eines Esters der Ascorbinsäure (als Alkoholkomponente) mit einer aliphatischen Monocarbonsäure (bevorzugt einer langkettigen Monocarbonsäure mit 10 bis 24 C-Atomen) zugegeben werden. Besonders geeignet sind Ascorbyl-Stearat und -Palmitat. Durch einen Zusatz dieser Ester kann die Wirkung der primären Aminoverbindungen weiter gesteigert werden.

Ausführungsbeispiele

# EP 0 463 465 A1

Versuchsbeschreibung:

Die Komponenten der Stufe 1 werden, jeweils mit bzw. ohne Nitrosaminbildung verhindernde Zusatzstoffe, in üblicher Weise auf einem Walzwerk vermischt und in der 2. Stufe, ebenfalls auf einem Walzwerk, dem Beschleunigersystem zugefügt.

Die so erhaltene Kautschukmischung wurde in Form von 2 mm-Platten in einer Heizpresse 10 Minuten bei 150°C vulkanisiert. Nach Abkühlen und Lagern wurde der Nitrosamingehalt im Vulkanisat bestimmt.

Die Ergebnisse der Nitrosaminbestimmung in den Modellvulkanisaten belegen, daß durch Verwendung des Zusatzes eine Absenkung des Nitrosamingehaltes um 90 bzw. 85 % erreicht wird.

| Beispiel 1 | | Nitrosaminbildung verhindernder Zusatz | |
| | | ohne | mit |
| | | Gew.-Teile | Gew.-Teile |
| 1. Stufe | helle Crepe | 100 | 100 |
| | Stearinsäure | 1,5 | 1,5 |
| | ZnO aktiv | 5 | 5 |
| | Furnaceruß N 550 | 50 | 50 |
| | Amidosulfonsäure | – | 1 |
| | Harnstoff | – | 2 |
| 2. Stufe | N-Morpholino-2-benzo-thiazolylsulfenamid (MBS) | 1 | 1 |
| | Schwefel | 2,5 | 2,5 |
| | nachgewiesenes Nitroso-Morpholin rel.-% | 100 | 10 |

| Beispiel 2 | | Nitrosaminbildung verhindernder Zusatz | |
| | | ohne | mit |
| | | Gew.-Teile | Gew.-Teile |
| 1. Stufe | helle Crepe | 100 | 100 |
| | Stearinsäure | 1,5 | 1,5 |
| | ZnO aktiv | 5 | 5 |
| | Furnaceruß N 330 | 50 | 50 |
| | Ethanolamin | – | 5 |
| 2. Stufe | N-Morpholino-2-benzo-thiazolylsulfenamid (MBS) | 1 | 1 |
| | Schwefel | 2,5 | 2,5 |
| | nachgewiesenes Nitroso-Morpholin rel.-% | 100 | 15 |

3

| Beispiel 3 | | Nitrosaminbildung verhindernder Zusatz | |
| --- | --- | --- | --- |
| | | ohne | mit |
| | | Gew.-Teile | Gew.-Teile |
| 1. Stufe | Nitrilkautschuk* | 100 | 100 |
| | Stearinsäure | 1 | 1 |
| | ZnO | 5 | 5 |
| | Furnaceruß N 330 | 50 | 50 |
| | Alkylsulfonic Ester | 10 | 10 |
| | Antioxidant IPPD | 1,5 | 1,5 |
| | Antioxidant TMQ | 1,5 | 1,5 |
| | Amidosulfonsäure | - | 0,8 |
| | Ascorbylpalmitat | - | 0,8 |
| | Harnstoff | - | 3,4 |
| 2. Stufe | Tetramethylthiuram-disulfid (TMTD) | 2,5 | 2,5 |
| | N-Morpholino-2-benzo-thiazolylsulfenamid (MBS) | 2,0 | 2,0 |
| | Schwefel | 0,3 | 0,3 |
| | nachgewiesene Nitroverbindung rel.-% | 100 | 22 |

\* Perbunan N 3307 NS (Bayer AG)

**Patentansprüche**

1. Schwefelvulkanisierbare Kautschukmischungen, enthaltend einen Zusatz von 0,1 bis 10 Gew.-%, bezogen auf Kautschuk einer Verbindung mit mindestens einer primären Aminogruppe.

2. Kautschukmischungen nach Anspruch 1, enthaltend zusätzlich 0,1 bis 10 Gew.-%, bezogen auf Kautschuk eines Esters der Ascorbinsäure (als Alkoholkomponente) mit einer aliphatischen Monocarbonsäure.

3. Verwendung einer Verbindung mit mindestens einer primären Aminogruppe als die Nitrosaminbildung verhindernder Zusatz zu schwefelvulkanisierbaren Kautschukmischungen.

4. Verwendung einer Verbindung mit mindestens einer primären Aminogruppe zusammen mit einem Ester der Ascorbinsäure (als Alkoholkomponente) und einer aliphatischen Monocarbonsäure als die Nitrosaminbildung verhindernder Zusatz zu schwefelvulkanisierbaren Kautschukmischungen.

5. Verfahren zur Verhinderung der Nitrosaminbildung bei der Vulkanisation schwefelvulkanisierbarer Kautschukmischungen, dadurch gekennzeichnet, daß man bei der Herstellung der Mischung vor der Zugabe des Vulkanisationsbeschleunigers 0,1 bis 10 Gew.-%, bezogen auf Kautschuk, einer Verbindung mit mindestens einer primären Aminogruppe einarbeitet.

6. Verfahren nach Anspruch 5, dadurch gekennzeichnet, daß man zusätzlich 0,1 bis 10 Gew.-%, bezogen auf Kautschuk eines Esters der Ascorbinsäure (als Alkoholkomponente) mit einer aliphatischen Monocarbonsäure einarbeitet.

**Patentanspruch für folgenden Vertragsstaat: ES**

1. Verfahren zur Verhinderung der Nitrosaminbildung bei der Vulkanisation schwefelvulkanisierbarer Kautschukmischungen, dadurch gekennzeichnet, daß man bei der Herstellung der Mischung vor der Zugabe des Vulkanisationsbeschleunigers 0,1 bis 10 Gew.-%, bezogen auf Kautschuk, einer Verbindung mit mindestens einer primären Aminogruppe und gegebenenfalls zusätzlich 0,1 bis 10 Gew.-%, bezogen auf Kautschuk eines Esters der Ascorbinsäure (der Alkoholkomponente) mit einer aliphatischen Monocarbonsäure einarbeitet.

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| X | KAUTSCHUK UND GUMMI - KUNSTSTOFFE. Bd. 43, Nr. 2, Februar 1990, HEIDELBERG DE Seiten 107 - 113; M. LHEUREUX ET AL.: 'NITROSAMINES IN RUBBER VULCA-NIZATE: AN EVALUATION OF SPECIFIC INHIBITORS ' * Seite 110, linke Spalte, Absatz 3 - Seite 110, rechte Spalte, Absatz 1 * — — — | 1,3,5 | C 08 K 5/17 C 08 K 5/21 C 08 K 3/30 C 08 K 5/20 C 08 L 21/00 |
| X | GB-A-9 632 44   (DUNLOP RUBBER COMPANY LIMITED) * Ansprüche 1,5; Beispiel * — — — | 1 | |
| X | DE-A-2 009 999   (PHOENIX GUMMIWERKE AG) * Anspruch; Beispiele * — — — | 1 | |
| A | US-A-4 331 468   (M. L. WILLIAMS) * Anspruch 1 * — — — | 3 | |
| A | US-A-4 251 563   (G. D. GRUETZMACHER ET AL.) * Anspruch 1 * — — — — — | 2,4,6 | |

| | | | RECHERCHIERTE SACHGEBIETE (Int. Cl.5) |
|---|---|---|---|
| | | | C 08 K C 08 L |

Der vorliegende Recherchenbericht wurde für alle Patentansprüche erstellt

| Recherchenort | Abschlußdatum der Recherche | Prüfer |
|---|---|---|
| Den Haag | 04 Oktober 91 | VAN HUMBEECK F.W.C. |